(19) Europäisches Patentamt

European Patent Office

Office européen des brevets

(11) **EP 0 882 577 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
***B32B 27/36*** *(2006.01)*    ***B32B 3/30*** *(2006.01)*

(21) Anmeldenummer: **98108976.6**

(22) Anmeldetag: **18.05.1998**

(54) **Biaxial orientierte Polyesterfolie mit hoher Sauerstoffbarriere, Verfahren zu ihrer Herstellung und ihre Verwendung**

Biaxially oriented polyester film having good oxygen barrier properties, method for producing the same and its use

Film de polyester orienté biaxialement ayant des bonnes propriétés de barrière à l'oxygène, son procédé de fabrication et son utilisation

(84) Benannte Vertragsstaaten:
**DE FR GB IT LU**

(30) Priorität: **04.06.1997 DE 19723468**

(43) Veröffentlichungstag der Anmeldung:
**09.12.1998 Patentblatt 1998/50**

(73) Patentinhaber: **Mitsubishi Polyester Film GmbH**
**65203 Wiesbaden (DE)**

(72) Erfinder:
• **Peiffer, Herbert**
**55126 Mainz (DE)**
• **Hilkert, Gottfried**
**55291 Saulheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 368 278       EP-A- 0 624 454**
**EP-A- 0 678 554**

**Beschreibung**

Die Erfindung betrifft eine biaxial orientierte, koextrudierte Polyesterfolie mit einer Basisschicht die zumindest zu 80 Gew.-% aus einem thermoplastischen Polyester besteht und einer oder mehreren Deckschichten. Die Erfindung betrifft weiterhin ein Verfahren zur Herstellung der Polyesterfolie und ihre Verwendung.

In vielen Fällen wird bei Lebensmittelverpackungen eine hohe Sperrwirkung gegenüber Gasen, Wasserdampf und Aromastoffen verlangt (gleichbedeutend mit einer geringen Durchlässigkeit oder geringen Permeation). Ein gängiges Verfahren, solche Verpackungen herzustellen, besteht darin, die dafür verwendeten Kunststofffolien mit Aluminium im Hochvakuum zu bedampfen bzw. zu metallisieren. Ein weiteres gängiges Verfahren besteht darin, die Folien mit keramischen Materialien, wie z.B. $SiO_x$, $AlO_x$ oder $MgO_x$, zu beschichten. Hierbei handelt es sich im wesentlichen um transparente Beschichtungen.

Die Sperrwirkung gegenüber den oben genannten Stoffen hängt im wesentlichen von der Art der Polymeren in der Folie und der Güte der aufgebrachten Sperrschichten ab. So wird mit metallisierten, biaxial orientierten Polyesterfolien eine sehr hohe Sperrwirkung gegenüber Gasen, wie Sauerstoff und Aromastoffen, erzielt. Gegenüber Wasserdampf erreicht man sie mit metallisierten, biaxial orientierten Poly-propylenfolien.

Aufgrund ihrer guten Sperreigenschaften werden mit metallisierten oder keramisch beschichteten Folien insbesondere Lebens- und Genußmittel verpackt, bei denen durch lange Lager- oder Transportzeiten die Gefahr besteht, daß im Falle einer nicht ausreichenden Barriere die verpackten Lebensmittel verderben, ranzig werden oder an Geschmack verlieren, beispielsweise bei Kaffee, fetthaltigen Snacks (Nüssen, Chips u.a.) oder kohlensäurehaltigen Getränken (in Standbeuteln; engl.: pouches).

Sollen Polyesterfolien mit einer aufgedampften Aluminiumschicht oder mit aufgebrachten keramischen Schichten als Verpackungsmaterial verwendet werden, dann sind sie in der Regel Bestandteil eines mehrschichtigen Folienverbunds (Laminat). Daraus hergestellte Beutel lassen sich z. B. auf einer vertikalen Schlauchbeutel-, Form-, Füll und Verschließmaschine (vffs) füllen. Die Beutel werden auf ihrer Innenseite (d.h. auf der dem Füllgut zugewandten Seite) gesiegelt, wobei die Siegelschicht in der Regel aus Polyethylen oder Polypropylen besteht. Der Folienverbund weist dabei den folgenden typischen Aufbau auf: Polyesterschicht/Aluminium- oder Keramik-Schicht/Kleberschicht/Siegelschicht. Bei einer Dicke des Laminats von etwa 50 bis 150 μm ist die Metall-oder Keramikschicht nur 10 bis 80 nm dick. Eine sehr dünne Funktionsschicht genügt daher bereits, um einen ausreichenden Lichtschutz und sehr gute Barriereeigenschaften zu erreichen.

Die Sauerstoffbarriere bzw. die Sauerstoffdurchlässigkeit wird in der Regel nicht an dem Laminat oder der Verpackung selbst, sondern an der metallisierten Polyesterfolie gemessen. Um die Qualität der Lebens- oder Genußmittel auch bei längeren Lagerzeiten zu gewährleisten, darf die Sauerstoffdurchlässigkeit (gleich Permeation) der metallisierten Folie nicht mehr als 2 $cm^3/m^2$ bar d, insbesondere aber nicht mehr als 1 $cm^3/m^2$ bar d betragen. Zukünftig geht die Forderung der Verpackungsindustrie in Richtung einer noch weiter erhöhten Barriere, wobei Permeationswerte der metallisierten oder keramisch beschichteten Folien von deutlich weniger als 1,0 $cm^3/m^2$ bar d angestrebt werden.

Nach dem Stand der Technik ist es weder hinreichend bekannt, worauf die Barrierewirkung von metallisierten oder keramisch beschichteten Polyesterfolien im einzelnen beruht noch wie diese entscheidend zu verbessern ist. Wichtige Einflußgrößen sind offensichtlich die Substratoberfläche, die Art des Substratpolymers sowie dessen Morphologie. Allgemein wird davon ausgegangen, daß glatte Substratoberflächen bessere Barriereeigenschaften ergeben.

In "Thin Solids Films" 204 (1991), S. 203-216, wurde hierzu von Weiss u.a. der Einfluß der Rauhigkeit einer Substratschicht auf die Permeation untersucht. Dazu wurden Polyesterfolien mit Lack beschichtet, der in unterschiedlichen Konzentrationen Titandioxidpartikel enthielt. In seinen Experimenten wurde die Konzentration an Titandioxidpartikel im Lack zwischen 2 und 20 Gew.-% variiert. Die Rauhigkeit der gecoateten Substratoberfläche konnte mit dieser Methode von 43 nm (unlackierte und lackierte Folie, ohne Titandioxid) bis 124 nm varriert werden. In seinen Experimenten ergaben sich mit steigender Rauhigkeit (steigendem $TiO_2$-Anteil) der lackierten Oberfläche eindeutig höhere Sauerstoffdurchlässigkeiten nach dem Aluminiumbedampfen. Den allerdings größten Sprung in der Sauerstoffdurchlässigkeit wurden für die lackierte Folie (0 Gew.-%) im Vergleich zur unlackierter Folie festgestellt. In beiden Fällen war die Rauhigkeit der Substratoberfläche jedoch gleich groß. Allein durch das Lackieren der Folie verschlechterte sich die Barriere von ca. 0,43 $cm^3/m^2$ d bar (plain film) auf ca. 19 $cm^3/m^2$ d bar (lackierte Folie). Von weiterem Nachteil bei seinen Untersuchungen war, daß die Aluminiumschicht mittels Laborverdampfer aufgebracht wurde. Hierbei werden im Vergleich zum Industriemetallisierer wesentlich niedrige Permeationswerte erreicht, und der Einfluß der Substratoberfläche wird verschmiert.

Weitere detaillierte Untersuchungsergebnisse über den Einfluß der Substratoberfläche von Polyesterfolien auf die Barriereeigenschaften sind in der Dissertation von H. Utz (Technische Universität München 1995: "Barriereeigenschaften aluminiumbedampfter Kunststofffolien") zu finden.

Nach den Untersuchungen von Utz (S. 66, ff) besteht zwischen der Oberflächenrauhigkeit (Mittenrauhigkeit $R_a$) der PET-Folie und der Sauerstoffbarriere kein unmittelbarer Zusammenhang. Die als besonders glatt hervorgehobene Videofolie mit einem Mittenrauhigkeitswert von $R_a$ = 22 Nm hat z. B. mit 1,3 $cm^3/m^2$ bar x d eine mit der viel rauheren PET II-Folie ($R_a$ = 220 Nm) vergleichbare Sauerstoffdurchlässigkeit von 1,2 cm$^3$/m$^2$x bar x d.

Die EP-A 0 624 454 betrifft einen biaxial orientierten Polyesterfilm, dessen Hauptkomponente Polyester ist, wobei der Kristallisationsparameter $\Delta T_{cg}$ des Polyesters nicht über 70 °C beträgt. Auf der Oberfläche des Films sind Vorsprünge ausgebildet, deren Anzahl $\geq$5 x 10$^3$/mm$^2$ Oberfläche beträgt. Das Verhältnis $N_R$ zwischen der Anzahl an Vorsprüngen und der Anzahl an Teilchen, die in der Oberflächenschicht enthalten sind, ist nicht kleiner als 5. Die Vorsprünge auf der Oberfläche werden aufgrund der Kristallisation des Polyesters gebildet. Die Ausbildung der Vorsprünge wird bevorzugt ohne das Hinzufügen von inerten Partikeln erzielt. Das Verfahren zur Herstellung dieses Polyesterfilms umfasst folgende Schritte: eine Wärmebehandlung zumindest einer Oberfläche eines nicht gereckten Films, dessen Hauptkomponente Polyester mit einem Kristallisationsparameter $\Delta T_{cg}$ von nicht mehr als 70 °C ist, bei einer Temperatur von 100 bis 250°C für 0,5 bis 150 s sowie das Beschleunigen der Kristallisation der zumindest einen Oberfläche durch die Wärmebehandlung; das biaxiale Recken des wärmebehandelten nicht-gereckten Films, so dass auf einer Oberfläche des biaxial gereckten Films Vorsprünge in eine Anzahl von nicht weniger als 5 x 10$^3$/mm$^2$ gebildet werden und das Verhältnis $N_R$ zwischen der Anzahl an Vorsprüngen und der Anzahl an Teilchen, die in einer Oberflächenschicht, welche die Oberfläche des biaxial gereckten Films bildet, enthalten sind, nicht weniger als 5 beträgt.

In der EP-A 0368 278 ist eine Polyester laminierte Struktur aus einer Basisschicht und zwei Polyalkylenterephthalat-Deckschichten beschrieben, wobei diese Struktur biaxial orientiert sein kann. Die verstreckte Polyesterfolie ohne Deckschichten kann mit Metall beschichtet sein. Bei der Herstellung von Polyethylenterephthalat werden heterogene Katalysatoren verwendet, nicht jedoch bei der Herstellung der Deckschichten. Es ist auch keine Rede davon, dass die Oberfläche der Polyesterfolie Vorsprünge aufweisen soll.

Die EP-A-0 124 291 beschreibt eine einschichtige, biaxial orientierte Polyesterfolie für magnetische Aufzeichnungsbänder, die durch folgende Oberflächeneigenschaften gekennzeichnet ist

    a) die mittlere Rauhigkeit $R_a$ beträgt 1 nm bis 16 nm,
    b) der Reibungskoeffizient $\mu$k liegt zwischen 0,01 bis 0,20 und
    c) zwischen $R_a$ und $\mu$k besteht folgende Beziehung

$$0{,}1 \leq 10 \text{ * } R_a + \mu k \leq 0{,}31.$$

Diese Eigenschaften werden durch Einsatz von TiO$_2$-Partikeln (Anatas) oder TiO$_2$- und CaCO$_3$-Partikeln in einem Gewichtsanteil von 0,1 bis 0,5 % bzw. 0,1 bis 0,3 % erzeugt. Der Durchmesser der TiO$_2$-Partikeln liegt zwischen 0,1 und 0,5 $\mu$m. Die Oberfläche dieser Folie wird durch eine Vielzahl von Erhebungen/Vorsprünge gebildet ("the excellent slippemess of the polyester film of this invention is simultaneously achieved by the presence of the many very minute protuions), die einer Verteilung derart gehorchen, daß der Graph, der durch die folgende Beziehung beschrieben werden

$$\log y = -8{,}0\, x + 4{,}34, \qquad\qquad y > 10$$

nicht gekreuzt werden. In dieser Gleichung bedeutet x ($\mu$m) ein Abstand in Höhenrichtung von einem Standard Level und y die Anzahl an Erhebungen (Anzahl/mm$^2$), wenn die Erhebungen bei einer Höhe von x geschnitten werden. Die Verteilung der Erhebungen wird mit einem Standard-Rauhigkeitsmeßgerät bestimmt.

Die EP-A-0 490 665 A1 beschreibt eine einschichtige, biaxial orientierte Polyesterfolie für magnetische Aufzeichnungsbänder, die

    a) 0,05 bis 1,0 Gew.-% $\theta$-Aluminiumoxid mit einem durchschnittlichen Teilchendurchmesser im Bereich von 0,02 bis 0,3 $\mu$m,
    b) 0,01 bis 1,5 Gew.-% inerte Partikel anderen Typs als $\theta$-Aluminiumoxid mit einem durchschnittlichen Teilchendurchmesser im Bereich von 0,1 bis 1,5 $\mu$m enthält und größer ist als durchschnittlichen Teilchendurchmesser des $\theta$-Aluminiumoxid.

Die Oberfläche dieser Folie wird durch eine Vielzahl von Erhebungen/Vorsprünge gebildet, die durch die Beziehung

$$-11{,}4\, x + 4 < \log y < -10{,}0\, x + 5 \qquad\qquad y > 30,\ x > 0{,}05\ \mu m$$

beschrieben werden. In dieser Gleichung bedeutet x ($\mu$m) ein Abstand in Höhenrichtung von einem Standard Level und y die Anzahl an Erhebungen (Anzahl/mm$^2$), wenn die Erhebungen bei einer Höhe von x geschnitten werden. Die Verteilung der Erhebungen wird wie bei der EP-A-0 124 291 gemessen.

Nach dem Stand der Technik sind weiterhin Folien bekannt, die sich durch unterschiedliche Oberflächen auszeichnen (dual surface). Diese Folien sind insbesondere für magnetische Aufzeichnungsmedien geeignet und zeichnen sich im wesentlichen durch unterschiedliche Topographien aus (z.B. Oberfläche A glatt, Oberfläche B rauh).

Die DE-A-16 94 404 beschreibt einen Schichtstoff mit einer Mehrzahl von Schichten eines orientierten kristallisierbaren thermoplastischen Filmes, worin mindestens 1 der äußeren Schichten einen Zusatz enthält. Die Zusätze sind übliche inerte anorganische oder organische Partikel, die im Falle von inerten Partikeln wie SiO$_2$ in einer Konzentration von 1 bis 25 Gew.-% den äußeren Schichten zugegeben werden. Die Teilchengröße beträgt dabei 2 bis 20 $\mu$m. Die Schichtstoffe können z.B. für dekorative Zwecke mit Aluminium metallisiert oder für Magnetbänder verwendet werden.

Die DE-A-22 30 970 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Die Folie ist dadurch gekennzeichnet, daß sie

a) eine beschichtete Oberfläche A enthält, die teilchenfrei ist und

i) mindestens 4 $\mu$m dick ist oder
ii) mindestens 50 % der Dicke der gesamten Folienlage ausmacht; und

b) eine teilchenhaltige zweite Schicht mit verhältnismäßiger rauher Oberfläche enthält, die

i) mindestens 1 % einzelne Teilchen eines bestimmten Polymerisates A und
ii) mindestens 1 % einzelne Teilchen eines bestimmten Polymerisates B besteht.

Die EP-B-0 061 769 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Gegebenenfalls ist auf der anderen Oberfläche B der Polyesterfolie noch eine Schmiermittelschicht vohanden. Die Folie ist dadurch gekennzeichnet, daß die beschichtete Oberfläche A

a) eine mittlere Rauhigkeit R$_a$ (Gipfel-Tal-Wert) von nicht mehr als 5 nm (60 nm) hat,
b) die Zahl der Vorsprünge mit einer Höhe von 0,27 bis 0,54 $\mu$m 0 bis 0,2/mm$^2$ ist und
c) frei ist von Vorsprüngen Vorsprünge mit einer Höhe von größer als 0,54 $\mu$m.

Die EP-B-0 088 635 beschreibt eine koextrudierte biaxial orientierte Polyesterfolie mit wenigstens zwei Schichten, von denen eine Schicht A aus thermoplastischem Harz besteht, und eine Schicht B, thermoplastisches Harz und feine Teilchen enthält. Die Folie ist dadurch gekennzeichnet, daß die Oberflächenrauhigkeit R$_a$ der äußeren Oberfläche der Schicht A kleiner als 5 nm ist und die äußere Oberfläche der Schicht B entweder

i) eine Oberfläche mit einer Oberflächenrauhigkeit R$_a$ von 5 bis 40 nm ist und eine Vielzahl von Vertiefungen und eine Vielzahl von Vorsprüngen aufweist, die in einer bestimmten Anordnung angeordnet sind oder
ii) eine Oberfläche ist, die auf einer ebenen Fläche gebildete Vorsprünge aufweist und deren Oberfläche und die mit einer Schicht C bedeckt ist, die aus einem Schmiermittel besteht und eine Oberflächenrauhigkeit R$_a$ von 5 bis 40 nm aufweist.

Nach Beispiel 1 dieser Schrift ist die Oberflächenschicht A "substantially free of internal particles formed by reaction of the catalyst residue... (Seite 7)". Nachteilig an dieser Folieoberfläche ist, daß sie gegen sich selbst und gegenüber bestimmte andere Oberflächen (z.B. Gummiwalzen) blockt. Die Folie läßt sich nicht wirtschaftlich verarbeiten, insbesondere beim Metallisieren im Vakuum neigt diese Folie infolge der hohen Blockneigung zu Abrissen, was mit großem wirtschaftlichen Schaden verbunden sein kann. Die Folie ist im Sinne der zu lösenden Aufgabe nicht geeignet.

Die EP-B-0 502 745 beschreibt eine koextrudierte biaxial orientierte Polyesterfolie mit wenigstens drei Schichten, von denen eine äußere Schicht A

a) anorganische Teilchen mit einer mittleren Primärteilchengröße D im Bereich von 1 bis 100 nm enthält, die der Gleichung D<T<200D genügt, worin T die Dicke der Schicht A ist,
b) Teilchen B mit einer mittleren Primärteilchengröße D1 im Bereich von 0,3 bis 2 $\mu$m enthält und einer Primärteilchen-Größenverteilung mit einer relativen Standardardabweichung von höchstens 0,6 und
c) die mittlere Primärteilchengröße D der Teilchen A geringer ist als die mittlere Primärteilchengröße D1 der Teilchen B ist.

Weiterhin ist bekannt, daß sich durch eine besondere Auswahl der Polymere für die als Substrat dienende Folie die Sauerstoffbarriere verbessern läßt (Schricker, G.: Metallisierte Kunststoffolien für höherwertige Verpackungen. In: ICI 5th International Metallising Symposium 1986, Cannes). Besonders geeignet sind beispielsweise Polyester, speziell solche aus Ethylenglykol und Terephthalsäure oder aus Ethylenglykol, Terephthalsäure und Naphthalin-2,6-dicarbonsäure. Daneben sind auch Polyamide, Ethylen-Vinylkohol-Copolymere (EVOH) und Polyvinylidenchlorid brauchbar vorteilhaft verwendbar. So beschreibt beispielsweise die US-A 5 506 014 einen Copolyester aus (a) 45 bis 85 mol-% Terephthalsäure, (b) 10 bis 40 mol-% Naphthalindicarbonsäure und (c) 5 bis 15 mol-% einer Dicarbonsäure mit 2 bis 8 Kohlenstoffatomen und (d) Ethylenglykol (die Molprozente beziehen sich auf den Gesamtanteil an Dicarbonsäuren). Dieser Polyester soll sich durch verbesserte Barriereeigenschaften gegenüber Gasen auszeichnen. Verwendet wird er u.a. für die Herstellung von Flaschen oder Behältern sowie von Folien unterschiedlicher Stärke. Nachteilig an den genannten Rohstoffen ist, daß sie gegenüber Polyethylenterephthalat (PET) deutlich teurer oder für die Anwendung in der Lebensmittelverpackung ungeeignet bzw. nicht amtlich zugelassen sind.

Aufgabe der vorliegenden Erfindung ist es, eine metallisierte oder keramisch beschichtete, koextrudierte, biaxial orientierte Polyesterfolie zur Verfügung zu stellen, die sich durch eine hohe Sauerstoffbarriere auszeichnet. Durch die Folie sollen weniger als 0,5 cm$^3$ Sauerstoff pro Quadratmeter und pro Tag diffundieren, wenn Luft mit einem Druck von 1 bar darauf lastet. Die Folie soll den bekannten Verpackungsfolien dieser Art in den übrigen Eigenschaften mindestens gleichwertig sein. Sie soll sich zudem einfach und preiswert herstellen lassen, sowie auf den herkömmlichen Maschinen gut verarbeiten lassen (d.h., z.B. nicht Blocken). Eine weitere Aufgabe bestand darin, die optischen Eigenschaften der metallisierten oder der keramisch beschichteten Folie zu verbessern (d.h., insbesondere den Glanz).

Gelöst wird die Aufgabe durch eine biaxial orientierte, koextrudierte Polyesterfolie mit einer Basisschicht, die zumindest zu 80 Gew.-% aus einem thermoplastischen Polyester besteht und einer oder mehreren Deckschichten, von denen mindestens eine äußere Deckschicht inerte Partikel zwischen 0 und 0,08 Gew.-% und/oder interne Partikel enthält, und mit einer Metall- oder Keramikschicht, wobei die äußere Deckschicht eine Anzahl von Erhebungen/Vorsprüngen N/mm$^2$ Folienoberfläche aufweist, deren Höhen h größer als 0,01 $\mu$m und Kleiner als 10 $\mu$m und deren Durchmesser d größer als 0,01 $\mu$m und kleiner als 10 $\mu$m betragen, zwischen N und H die Gleichung (1)

$$\log N/mm^2 \leq A_h - B_h * \log (h/\mu m) \qquad (1)$$

mit $A_h = 1,4$ und $B_h = 2,5$ und zwischen N und d die Gleichung (2)

$$\log N/mm^2 \leq A_d - B_d * \log (d/\mu m) \qquad (2)$$

mit $A_d = 3,4$ und $B_d = 2,4$ bestehen.

Unter Erhebungen/Vorsprünge im Sinne der vorliegenden Erfindung werden kegelige Erhebungen/Vorsprünge verstanden, die aus der planaren Folienoberfläche hervorragen.

Unter internen Partikeln werden Katalysatorrückstände verstanden, die bei der Polyesterrohstoffherstellung im Rohstoff verbleiben.

Unter inerten Partikeln werden Partikel verstanden, die dem Rohstoff additiv, z.B. bei dessen Herstellung dazugegeben werden.

Zur Erzielung hoher Sauerstoffbarrieren metallisierter oder keramisch beschichteter Folien gemäß Aufgabenstellung muß entsprechend den Gleichungen (1) und (2) die Anzahl an Erhebungen/Vorsprünge N pro mm$^2$ Deckschichtoberfläche unterhalb einem bestimmten Zahlenwert liegen. Dieser Zahlenwert ist durch die rechten Seiten der Gleichungen (1) und (2) in Abhängigkeit der Höhe h und des Durchmessers d der Erhebungen/Vorsprünge eindeutig festgelegt.

Biaxial orientierte Polyesterfolien, die durch obige Gleichungen beschrieben werden, zeichnen sich durch eine vergleichsweise geringe Anzahl von Erhebungen/-Vorsprüngen der zu metallisierenden oder keramisch zu beschichtenden Deckschicht aus. Insbesondere Ist die Anzahl an Erhebungen/Vorsprünge im Bereich h < 0,5 $\mu$m, insbesondere im Bereich h < 0,4 $\mu$m, und ganz insbesondere im Bereich h < 0,3 $\mu$m deutlich geringer als nach dem Stand der Technik.

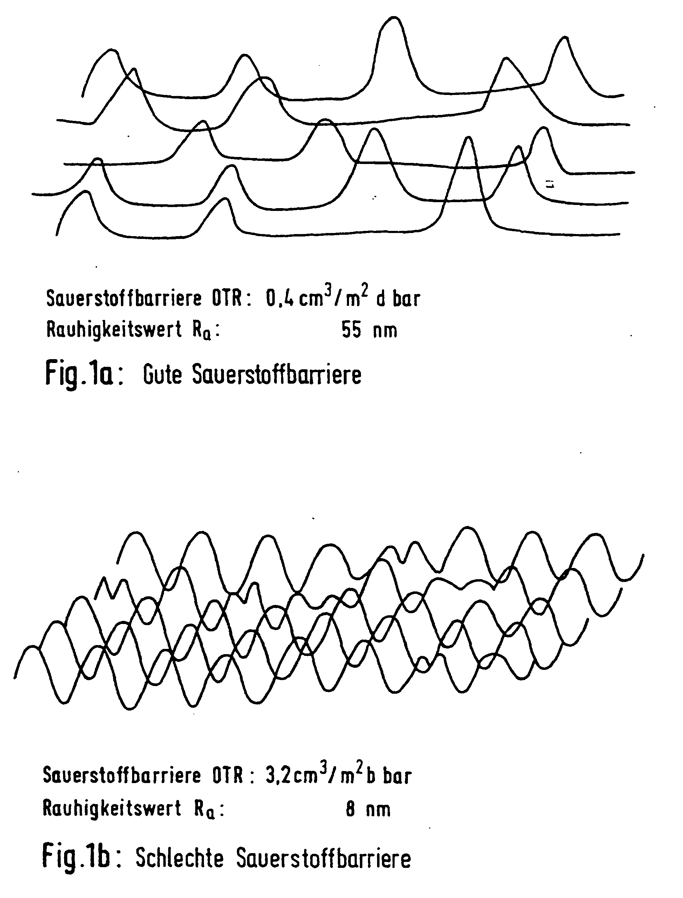

Entscheidend für die Erzielung von hohen Sauerstoffbarrieren metallisierter oder keramisch beschichteter Folien sind damit nicht niedrige Rauhigkeitswerte $R_a$ oder $R_z$, sondern vielmehr eine geringe Dichte an Erhebungen/Vorsprüngen N/mm$^2$ auf der Deckschichtoberfläche. In Figur 1 ist ein schematischer Vergleich zwischen Oberflächen wiedergegeben, die sich

a) durch eine gute Sauerstoffbarriere (niedrige Permeationswerte) gemäß der vorliegenden Erfindung auszeichnen (Fig. 1a) und

b) durch eine niedrige Sauerstoffbarriere (hohe Permeationswerte) auszeichnen (Fig. 1 b).

Parameter in der Darstellung ist der mittlere Rauhigkeitswert $R_a$, der nach der folgenden Formel berechnet wurde

$$R_a = 1/L * \int_0^L * f(x) * dx .$$

Ist die Dichte der ErhebungenNorsprünge N/mm$^2$ klein (Figur 1 a), so ist die Barriere im vorliegendem Sinne gut, ist die Dichte der Erhebungen/Vorsprünge dagegen groß (Figur 1 b), so ist die Barriere im vorliegendem Sinne schlecht. Aus der Graphik geht weiterhin hervor, daß der $R_a$-Wert prinzipiell ohne Einfluß auf die Barriereeigenschaften ist. Eine glatte Folie (z. B. $R_a$ < 10 nm) kann dabei eine sehr schlechte Barriere aufweisen, sofern die Anzahl der Erhebungen/Vorsprüngen N/mm$^2$ größer ist als nach den Gleichungen (1) und (2) berechnet. In diesem Fall enthält die Oberfläche/ Oberflächenschicht sehr viele feine Partikel, die zum Betrag vom $R_a$-Wert jedoch keinen nennenswerten Beitrag liefern. Eine solche Oberfläche ist für die Erzielung hoher Barrierewerte denkbar ungeeignet. Für die Erzielung hoher Barrierewerte sehr gut geeignet sind dagegen Folienoberflächen, die vergleichsweise wenige Erhebungen/Vorsprünge N pro Flächeneinheit der Deckschicht aufweisen. Dabei ist es von untergeordneter Bedeutung, ob die Erhebungen/Vorsprünge von großen Partikeln/Teilchen oder von kleinen Partikeln/Teilchen hervorgerufen werden.

Während die $R_a$-Werte für die Barriereeigenschaften keine praktische Bedeutung haben, so sind die $R_a$-Werte für die Verabeitung der erfindungsgemäßen Folie von praktischer Bedeutung. Auf der erfindungsgemäßen Folienoberfläche ist der $R_a$-Wert größer als 6 nm, bevorzugt größer als 8 nm und besonders bevorzugt größer als 10 nm.

Die $R_a$-Werte der erfindungsgemäßen Folienoberfläche sind nicht größer als 100 nm, vorteilhaft kleiner als 80 nm und insbesondere vorteilhaft kleiner als 60 nm.

Sind die $R_a$-Werte der erfindungsgemäßen Folienoberfläche kleiner als 6nm, so wird die Verarbeitung der Folie problematisch. Sind die $R_a$-Werte der erfindungsgemäßen Folienoberfläche größer als 100 nm, so wird die Abriebfestigkeit dieser Oberfläche schlechter.

Ist die auf die Fläche normierte Anzahl an Erhebungen N auf der zu metallisierenden oder keramisch zu beschichtenden Deckschicht der Folie größer als den rechten Seiten der Gleichungen (1) oder (2), so ist die Sauerstoffpermeation größer als 0,5 cm$^3$/m$^2$ bar d, was gemäß der vorliegenden Aufgabenstellung unerwünscht ist.

In einer vorteilhaften Ausführungsform der erfindungsgemäßen Folie besitzt die Konstante $A_h$ der vorgenannten Gleichung (1) den Wert $A_h$= 1,18 und in einer besonders vorteilhaften Ausführungsform den Wert $A_h$ = 1,0. In einer ebenfalls vorteilhaften Ausführungsform der erfindungsgemäßen Folie besitzt die Konstante $B_h$ der vorgenannten Gleichung (1) den Wert $B_h$ = 2,2 und in einer besonders vorteilhaften Ausführungsform den Wert $B_h$ = 2,1.

In einer vorteilhaften Ausführungsform der erfindungsgemäßen Folie besitzt die Konstante $A_d$ der vorgenannten Gleichung (2) den Wert $A_d$ = 3,0 und in einer besonders vorteilhaften Ausführungsform den Wert $A_d$ = 2,6. In einer ebenfalls vorteilhaften Ausführungsform besitzt die Konstante $B_d$ der vorgenannten Gleichung (2) den Wert $B_d$ = 2,3 und in einer besonders vorteilhaften Ausführungsform den Wert $B_d$ = 2,2.

In diesen vorteilhaften und den besonders vorteilhaften Ausführungsformen hat die erfindungsgemäße Deckschicht ausgesprochen wenig Erhebungen/Vorsprünge N pro Oberflächeneinheit. Die metallisierte oder keramisch beschichtete Folie zeichnet sich in diesem Fall eine besonders gute Sauerstoffbarriere aus. Die Permeationswerte der metallisierten oder keramisch beschichteten Folie sind kleiner als 0,4 cm$^3$/m$^2$ bar d.

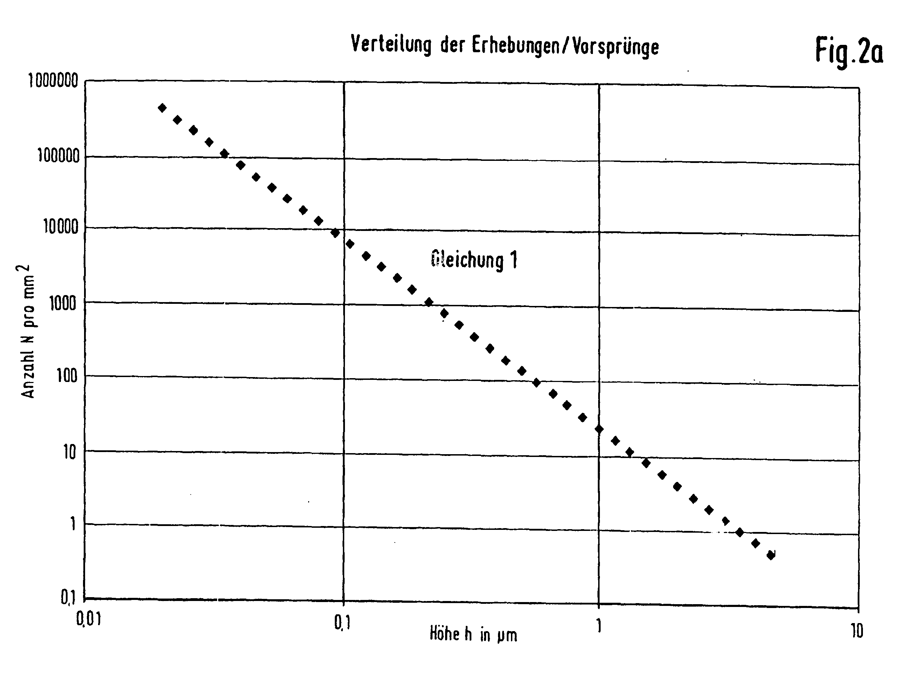

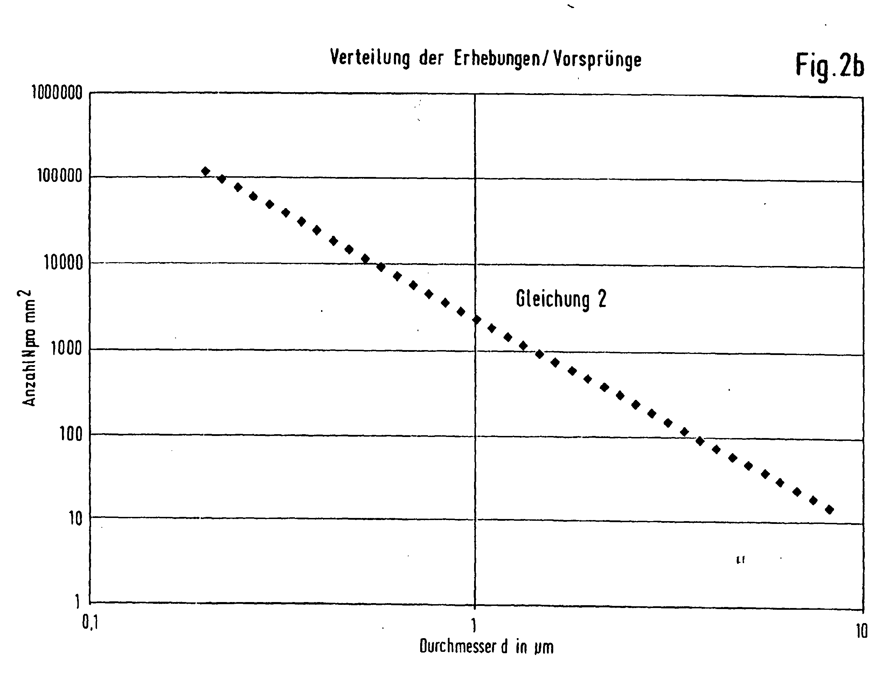

In **Figur 2** sind die Gleichungen (1) und (2) graphisch dargestellt. In doppelt logarithmischer Darstellung sind beide Beziehungen Geraden, die durch die angegebenen numerischen Werte beschrieben werden.

Zu den Gleichungen (1) und (2) ähnliche Beziehungen werden nach dem Stand der Technik in den vorgenannten Schriften EP-A-0 124 291 und EP-A-0 490 665 angegeben. In diesen Schriften werden jedoch - wie bereits erwähnt - Folien beansprucht, "with excellent slipperness of the polyester film of this invention is simultaneously achieved by th presence of the many very minute protuions (page 7) und die "many inert solid fine particles contains (page 9)", was bei den erfindungsgemäßen Folien gerade nicht der Fall ist.

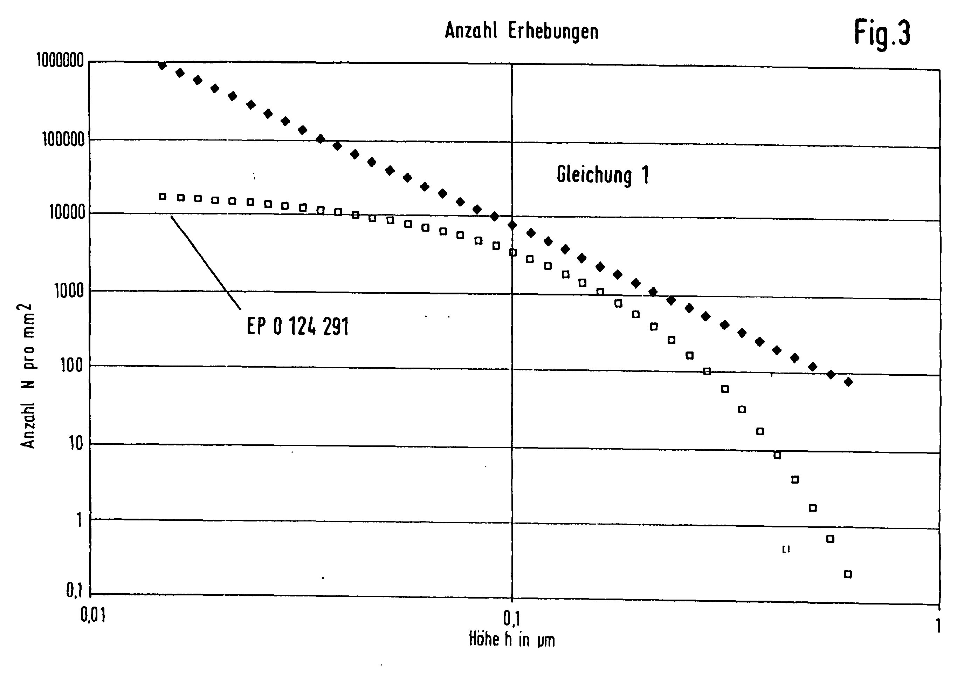

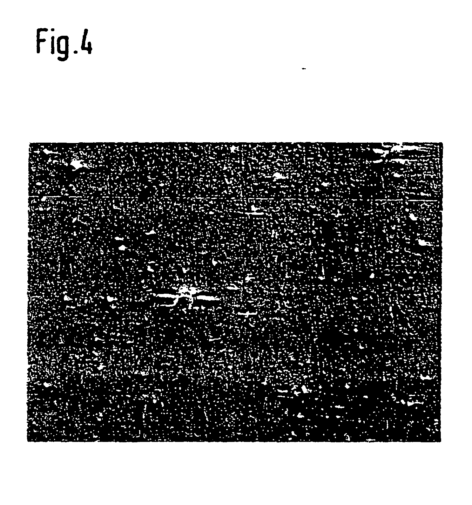

Außerdem unterscheidet sich das nach dem Stand der Technik angewandte Meßverfahren deutlich von dem in dieser Anmeldung benutzten Meßverfahren (vgl. Beschreibung des Meßverfahrens auf Seite **24**). Dementsprechend können auch die Topographien der Folienoberflächen unterschiedlich sein, wie aus dem Vergleich der Graphen (**Figur 3**) und aus den Vergleichsbeispielen hervorgeht. Zur weiteren Veranschaulichung der Unterschiede zwischen den Meßverfahren und den daraus resultierenden Unterschieden in der Topographie der Folien ist in **Figur 4** eine lichtmikroskopische Aufnahme (DIC, Differentiell Interference Contrast) an einer Polyesterfolie dargestellt. Dabei handelt es sich um eine Auflichtaufnahme einer mit Pigmenten gefüllten Polyesterfolie. Bei der hier verwendeten Methode werden, wie auf Seite **24** beschrieben, sämtliche Erhebungen/Vorsprünge mittels Rasterelektronenmikroskop aufgenommen und mit einem Bildanalyseverfahren ausgewertet. Demgegenüber wird nach dem Meßverfahren nach dem Stand der Technik eine Nadel benutzt, mit der die Oberfläche in einem bestimmten Abstand abgetastet wird. Die Nadel hinterläßt geradlinie Spuren, wie im Bild deutlich zu erkennen sind. Aus dem Bild ist deutlich zu sehen, daß bei dieser Methode

- nur wenige Pigmente erfaßt werden und
- die Pigmente zufällig getroffen werden.

Das Verfahren nach dem Stand der Technik ist damit nicht reproduzierbar und führt zu falschen Aussagen. Es gibt dem Fachmann keine Anregung, die vorliegende Aufgabe zu lösen.

Anhand der Vergleichsbeispiele wird quantitativ aufgezeigt, daß es sich bei den vorliegenden Folien um im Vergleich zum Stand der Technik um deutlich verschiedene Oberflächen handelt.

Die Unteransprüche geben bevorzugte Ausführungsformen der Erfindung an, welche nachstehend zusätzlich erläutert werden.

Erfindungsgemäß ist die Folie zumindest zweischichtig. Sie umfaßt dann als Schichten eine Schicht B und die metallisierte oder keramisch beschichtete Deckschicht A. In einer bevorzugten Ausführungsform der Erfindung weist die Folie auf der einen Seite der Schicht B (=Basisschicht) die Deckschicht A und auf der anderen Seite der Schicht B eine weitere Deckschicht C aus Polyethylenterephthalat, die die für die Herstellung und Verarbeitung der Folie förderlichen Pigmente enthält.

Für die Materialien der verschiedenen Schichten können prinzipiell verschiedene Rohstoffe verwendet werden, es ist jedoch bevorzugt, die einzelnen Schichten auf Basis von Polyesterrohstoffen herzustellen.

**Basismaterial**

Die Basisschicht der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Deckschicht vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X fhr $-CH_2 - C(CH_3)_2-$, $-C(CF_3)_2-$, $-O-$, $-S-$ oder $!SO_2$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stiiben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Calcium-, und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders geeignet haben sich solche Verfahren erwiesen, bei denen Umesterungskatalysatoren eingesetzt werden, bei denen nur wenige und/oder nur sehr kleine Erhebungen/Vorsrünge auf der Deckschicht der Folie erzeugt werden. Bevorzugt sind hierbei insbesondere Magnesium- und Mangan- Salzen. Diese Umesterungskatalysatoren werden bevorzugt bei der Herstellung des Basisrohstoffes, besonders bevorzugt aber bei der Herstellung des Deckschichtrohstoffes verwendet.

Folien mit der geforderten Topographie (Gleichungen (1) und (2)) werden erhalten, wenn Rohstoffe (insbesondere für die erfindungsgemäße Deckschicht) eingesetzt werden, die z.B. unter Verwendung eines Mn- oder Ca- Umesterungskatalysators hergestellt werden, bei denen der Mn-Gehalt im Bereich von 50 bis 200 ppm oder der Ca-Gehalt im Bereich von 50 bis 300 ppm liegt. Hierdurch werden interne Partikel erzeugt, die zu Folien mit der erfindungsgemäßenOberflächen führen. Es sind aber auch andere Umesterungskatalysatoren einsetzbar.

Die hier angegeben Konzentrationen der Umesterungskatalysatoren beziehen sich auf Rohstoffe für die erfindungsgemäßen Deckschicht, bei der keine zusätzliche inerten Partikel eingesetzt werden. Bei Zusatz von inerten Partikeln wird zweckmäßigerweise der Gehalt an interner Partikeln reduziert.

### Deckschichtmaterialien

Für die Deckschicht können prinzipiell die gleichen Polymere verwendet werden, wie für die Basisschicht. Daneben können in der Deckschicht auch andere Materialien enthalten sein, wobei dann die Deckschicht bevorzugt aus einem Gemisch von Polymeren, einem Copolymeren oder einem Homopolymeren besteht, welches Ethylen-2,6-naphthalat-Einheiten und Ethylen-terephthalat-Einheiten enthält. Bis zu 10 Mol-% der Polymere können aus weitere Comonomeren (s.o.) bestehen.

Für die andere Deckschicht (Deckschicht C) oder für eventuell vorhandene Zwischenschichten können prinzipiell die gleichen Polymere verwendet werden, wie zuvor für die Basisschicht und die Deckschicht A beschrieben.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit zusätzlichen Erhebungen/Vorsprüngen, mit Fließstörungen oder mit Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie im Sinne der vorliegenden Erfindung zu gewährleisten, sollte der SV-Wert der Deckschichtpolymeren im Bereich von 500 bis 1200, bevorzugt im Bereich von 550 bis 1150, insbesondere bevorzugt im Bereich von 600 bis 1000 liegen. Falls erwünscht, kann an den jeweiligen Granulaten eine Festphasenkondensation durchgeführt werden, um die benötigten SV-Werte der Materialien einzustellen. Es gilt, daß sich die SV-Werte der Polymerschmelzen für Basis- und Deckschicht(en) um nicht mehr als 200, vorzugsweise nicht mehr als 150, insbesondere aber nicht mehr als 100 Einheiten unterscheiden sollten.

### Additive

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Anti-blockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 5 Gew.-% erwiesen. Eine detaillierte Beschreibung der Antiblockmittel findet sich beispielsweise in der EP-A-0 602 964.

Die erfindungsgemäße Deckschicht A wird zu Erfüllung der Gleichungen (1) bis (2) im allgemeinen nur wenig oder überhaupt nicht mit inerten Pigmenten gefüllt. Die Konzentration der inerten Partikeln in der Deckschicht liegt zwischen **0 und 0,08** Gew.-%, vorzugsweise zwischen **0 und 0,065** Gew.-% und insbesondere zwischen **0 und 0,05** Gew.-% und richtet sich im wesentlichen nach der Größe der eingesetzten Partikeln. Bevorzugte Partikel sind $SiO_2$ in kolloidaler und in kettenartiger Form. Die Partikeldurchmesser der eingesetzten Teilchen sind prinzipiell nicht eingeschränkt. Für die Lösung der Aufgabe hat es sich jedoch als günstig erwiesen, Teilchen mit einem mittleren Primärpartikeldurchmesser von kleiner als 12 nm, bevorzugt kleiner als 8 nm und besonders bevorzugt kleiner als 6 nm und/oder Teilchen mit einem mittleren Primärpartikeldurchmesser von größer als 1 μm, bevorzugt größer als 1,5 μm und besonders bevorzugt größer als 2 μm zu verwenden.

In dem Falle, wo der Deckschicht keine inerten Partikel zugegeben werden, sollte z.B. durch eine geeignete Auswahl und Konzentration der Katalysatoren bei der Umesterungs- oder Polymerisationsreaktion sichergestellt werden, daß durch die sich bildenden Präzipitate ein Verblocken der Deckschichtoberfläche gegen sich selbst vermieden werden kann.

Bei der Auswahl der Pigmente, dem Pigmentdurchmesser und die Pigmentkonzentration für die anderen Schicht/en (z.B. der Schicht B bei einer zweischichtigen Folie oder der Basisschichtz B und der Deckschicht C bei einer dreischichtigen Folie) ist darauf zu achten, daß die Pigmentierung in diesen Schichten so gewählt wird, daß die Gleichungen (1) bis (2) nicht verletzt werden.

Die Pigmentierung der einzelnen, die Deckschicht A nicht betreffende Schichten kann danach sehr verschieden sein und richtet sich im wesentlichen nach dem Folienaufbau (Schichtaufbau) und den Anforderungen der Folie hinsichtlich Herstellungs- und Verarbeitungsverhalten.

Handelt es sich beispielsweise um die bevorzugte dreischichtige Folie mit der Basisschicht B und den Deckschichten A und C, so ist in der Basisschicht B die Partikelkonzentration vorzugsweise niedriger sein als die in der zweiten Deckschicht C. Die Pigmentierung in der Basisschicht B sollte so gewählt werden, daß sie sich nicht nachhaltig auf die Anzahl der Erhebungen/Vorsprünge N in der erfindungsgemäßen Deckschicht auswirkt. Bei einer dreischichtigen Folie vom genannten Typ wird in der Basischicht B die Partikelkonzentration zwischen 0 und 0,06 Gew.-%, vorzugsweise zwischen 0 und 0,04 Gew.-% und insbesondere zwischen 0 und 0,03 Gew.-% liegen. Der Partikeldurchmesser der eingesetzten Teilchen ist prinzipiell nicht eingeschränkt, jedoch sind Teilchen mit einem mittleren Durchmesser von größer 2 μm bevorzugt.

Ist die Folie zweischichtig aufgebaut, wobei die Deckschicht A mehr als 50 % der Gesamtdicke der Folie ausmacht, so kann die Schicht B durchaus stärker pigmentiert (höhere Pigmentkonzentratuion) werden als im anderen Fall, bei dem die Schichtdicke der Deckschicht A vergleichbar klein ist (< 50 %).

Die erfindungsgemäße Polyesterfolie enthält in einer besonders bevorzugten Ausführungsform noch eine zweite Deckschicht C. Aufbau, Dicke und Zusammensetzung der zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit denen der ersten Deckschicht identisch sein müssen. Die zweite Deckschicht kann auch andere gängige Deckschichtpolymere enthalten. Diese zweite Deckschicht enthält im allgemeinen mehr Pigmente (d.h. höhere Pigmentkonzentrationen) als die erste erfindungsgemäße Deckschicht A. Die Pigmentkonzentration in dieser zweiten Deckschicht liegt zwischen 0,02 und 0,4 %, vorteilhaft zwischen 0,02 und 0,3 % und ganz insbesondere zwischen 0,02 und 0,2 %. Sie richtet sich z.B. nach dem gewünschten Verarbeitungsverhalten der Folie. Vorzugsweise wird/werden die Pigmentart/en, die Pigmentkonzentration/en und der/die Partikelkonzentration/en so gwählt, daß eine gute Optik, sowie eine gute Herstellbarkeit und Verarbeitbarkeit der Folie gegeben ist.

Die Herstellbarkeit und die Verarbeitbarkeit der Folie wird dabei durch die Parameter

    a) mittlere Rauhigkeit $R_{a,C}$

    b) Haft-/Gleitreibung $\mu_C$ dieser Seite gegen sich selbst und durch die

    c) Anzahl der Erhebungen/Vorsprünge $N_C/mm^2$ auf dieser Seite beschrieben.

Vorzugsweise wird die Folie so ausgebildet, daß auf dieser der erfindungsgemäßen Deckschicht abgewandten Oberfläche C

a) der $R_a$-Wert zwischen 30 und 100 nm, bevorzugt zwischen 40 und 90 nm und insbesondere bevorzugt zwischen 45 und 80 nm liegt

b) die Haft-/Gleitreibung $\mu_C$ dieser Schicht gegen sich selbst kleiner als 0,6, bevorzugt kleiner als 0,5 und insbesondere bevorzugt kleiner als 0,45 ist und

c) die Anzahl der Erhebungen/Vorsprünge $N_C/mm^2$ durch die Gleichungen

$$A_{h2} - B_{h2} * \log (h/\mu m) < \log N_C/mm^2 < A_{h3} - B_{h3} * \log (h/\mu m) \qquad (3)$$

$$0,01 \ \mu m < h < 10 \ \mu m$$
$$A_{h2} = 1,42; \quad B_{h2} = 2,5$$
$$A_{h3} = 2,0; \quad B_{h3} = 3,0$$

$$A_{d2} - B_{d2} * \log (d/\mu m) < \log N_C/mm^2 < A_{d3} - B_{d3} * \log (d/\mu m) \qquad (4)$$

$$0{,}01 \; \mu m < h < 10 \; \mu m$$
$$A_{d2} = 3{,}4; \quad B_{d2} = 2{,}4$$
$$A_{d3} = 4{,}0; \quad B_{d3} = 3{,}3$$

vorgegeben sind.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 $\mu m$ und liegt vorzugsweise im Bereich von 0,5 bis 15 $\mu m$, insbesondere 1,0 bis 10 $\mu m$.

Die Dicke der Deckschicht(en) A (und C) ist im allgemeinen größer als 0,1 $\mu m$ und liegt allgemein im Bereich von 0,2 bis 3,0 $\mu m$, vorteilhaft im Bereich von 0,2 bis 2,5 $\mu m$, und insbesonders vorteilhaft im Bereich von 0,3 bis 2 $\mu m$, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt 4 bis 50 $\mu m$, insbesondere 5 bis 40 $\mu m$, vorzugsweise 6 bis 30 $\mu m$, wobei die Basisschicht einen Anteil von vorzugsweise etwa 40 bis 90 % an der Gesamtdicke hat.

Zur Herstellung der Deckschicht/en werden zweckmäßig Granulate aus Polyethylenterephthalat einem bzw. zwei Extrudern zugeführt. Die Materialien werden bei etwa 300 °C aufgeschmolzen und extrudiert.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die biaxial verstreckte und thermofixierte Polyesterfolie kann vor dem Aufbringen der metallischen oder keramischen Schicht auf einer oder beiden Seite(n) corona- oder flammbehandelt werden. Die Behandlungsintensität ist so gewählt, daß die Oberflächenspannung der Folie im allgemeinen über 45 mN/m liegt.

Das Aufbringen der Metallschicht bzw. der keramischen Schicht erfolgt zweckmäßig auf allgemein üblichen industriellen Anlagen. Metallschichten aus Aluminium werden üblicherweise durch Bedampfen hergestellt, während keramische Schichten daneben auch mit Elektronenstrahlverfahren oder durch Aufsputtern erzeugt werden können. Die Verfahrensparameter der Anlage beim Aufbringen der Metallschicht bzw. der keramischen Schicht auf die Folien entsprechen den Standardbedingungen. Die Metallisierung der Folien wird vorzugsweise so durchgeführt, daß die optische Dichte der metallisierten Folien im üblichen Bereich von ca. 2,2 bis 2,8 liegen. Das Aufbringen der keramischen Schicht auf die Folie wird so durchgeführt, daß die Schichtstärke der Oxidschicht vorzugsweise im Bereich von 30 bis 100 nm liegt. Die Bahngeschwindigkeit der zu beschichtenden Folie liegt bei allen Einstellungen zwischen 5 und 10 m/s. Auf die Metallisierung mit einer Laborbedampfungsanlage wurde nicht zurückgegriffen, weil die Erfahrung gezeigt hat, daß dann die Barrierewerte in der Regel wesentlich besser sind und nicht zu Vergleichszwecken herangezogen werden können.

Zur Einstellung weiterer gewünschter Eigenschaften kann die Folie beschichtet oder corona- bzw. flammvorbehandelt sein. Typische Beschichtungen sind haftvermittelnde, antistatisch, schlupfverbessernd oder dehäsiv wirkende Schichten. Es bietet sich an, diese zusätzlichen Schichten über inline coating mittels wässriger Dispersionen vor der Querverstreckung auf die Folie aufzubringen.

Die Metallschicht besteht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die keramische Schicht besteht bevorzugt aus Oxiden von Elementen der II., III. oder IV. Hauptgruppe des Periodensystems, insbesondere Oxiden des Magnesiums, Aluminiums oder Siliciums. Allgemein sind solche metallischen oder keramischen Materialien verwendet, die bei vermindertem Druck bzw. im Vakuum aufgebracht werden können. Die Dicke der aufgebrachten Schicht beträgt allgemein 10 bis 100 nm.

Ein weiterer Vorteil besteht darin, da8 die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, da8 das Regenerat in einer Konzentration von 20 bis 50 Gew.-%, bezogen auf das Gesamtgewicht der Folie, wiederverwendet werden kann, ohne da8 dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln. Speziell geeignet ist sie zur Herstellung von Vakuumverpackungen für Kaffee, insbesondere gemahlenem Kaffee.

Zur Charakterisierung der Rohstoffe und der Folien wurden die folgenden Methoden benutzt:

### (1) Optische Dichte

Zur Messung der optischen Dichte wurde das Densitometer Macbeth TD-904 von Macbeth (Division of Kollmorgen Instruments Corp.) eingesetzt. Die optische Dichte ist definiert als OD = - lg $I/I_0$, wobei I: die Intensität des eingestrahlten Lichtes, $I_0$: die Intensität des ausgestrahlten Lichtes und $I/I_0$:die Transmission bedeuten.

### (2) Sauerstoffbarriere

Die Messung der Sauerstoffbarriere an den metallisierten Folien erfolgte mit einem OX-TRAN 2/20 von Mocon Modern Controls (USA) entsprechend DIN 53 380, Teil 3.

### (3) SV-Wert

Zur Bestimmung des SV-Wertes (SV = solution viscosity) wurde eine Polyester-Probe in einem Lösungsmittel (Dichloressigsäure) gelöst. Die Viskosität dieser Lösung sowie die Viskosität des reinen Lösungsmittels wurden in einem Ubbelohde-Viskosimeter gemessen. Aus den beiden Werten wurde der Quotient ermittelt, davon 1,000 abgezogen und dieser Wert mit 1000 multipliziert. Das Resultat war der SV-Wert ("solution viscosity").

### (4) Reibung

Die Reibung wurde nach DIN 53 375 bestimmt. Die Gleitreibungszahl wurde 14 Tage nach der Produktion gemessen. Ein Verblocken findet statt, wenn der Reibwert größer als 1 ist.

### (5) Oberflächenspannung

Die Oberflächenspannung wurde mittels der sogenannten Tintenmethode (DIN 53 364) bestimmt.

### (6) Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

(7) <u>Glanz</u>

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prhffläche und werden von dieser reflektiert bzw. gestreut. Die auf den photoelektronischen Empfänger auffallenden Lichtstrahlen werden als proportionale elektrische Größe angezeigt. Der Me8wert ist dimensionslos und muß mit dem Einstrahlwinkel angegeben werden.

(8) <u>Bestimmung der Korngrößen auf Folienoberflächen</u>

Die Bestimmung der Größenverteilung von Antiblockmittelteilchen (Korngrößenverteilung) auf Folienoberflächen erfolgt mit einem Rasterelektronenmikroskop (z.B. DSM 982 Gemini, Fa. Leo GmbH (Zeiss)) Verbindung mit einem Bildanalysensystem. Die gewählten Vergrößerungen waren in allen Fällen 1700 fach.

Für diese Messungen werden Folienproben flach auf einen Probenhalter aufgebracht. Anschließend werden diese unter einem Winkel $\propto$ mit einer dünnen Metallschicht (z.B. aus Silber) schräg bedampft. Dabei ist $\propto$ der Winkel zwischen Probenoberfläche und der Ausbreitungsrichtung des Metalldampfes. Durch diese Schrägbedampfung entsteht an den Antiblockmittelteilchen ein Schattenwurf. Da die Schatten noch nicht elektrisch leitfähig sind, kann die Probe anschließend noch mit einem zweiten Metall (z.B. Gold) bedampft werden, wobei der Metalldampf dabei senkrecht auf die Probenoberfläche auftrifft.

Die so präparierten Probenoberflächen werden in einem Rasterelektronenmikroskop (REM) abgebildet. Die Schatten der Antiblockmittelteilchen sind infolge des Materialkontrastes sichtbar. Die Probe wird im REM so orientiert, daß die Schatten parallel zum unteren Bildrand (x-Richtung) verlaufen. In dieser Einstellung werden REM-Bilder angefertigt und in ein Bildanalysesystem übertragen. Mit diesem Bildanalysesystem werden nun die Längen der Schatten (in x-Richtung) und ihre maximale Ausdehnung in y-Richtung (parallel zum senkrechten Bildrand) vermessen.

Der Durchmesser D der Antiblockmittelteilchen in Höhe der Probenoberfläche ist gleich der maximalen Ausdehnung der Schatten d in y-Richtung. Die Höhe der Antiblockmittelteilchen, gemessen ab der Folienoberfläche errechnet sich aus dem Bedampfungswinkel $\propto$ und der Schattenlänge L und unter Kenntnis der für die REM-Abbildung gewählten Vergrößerung V zu:

$$h = (\tan(\alpha) * L)/V$$

Um eine genügend hohe statistische Sicherheit zu erreichen, werden einige tausend Antiblockmittelteilchen vermessen. Für die Durchmesser und Höhen der Teilchen werden dann mit Hilfe der bekannten statistischen Methoden Häufigkeitsverteilungen erstellt. Für den Teilchendurchmesser D wird dazu eine Klassenbreite von 0,2 $\mu$m und für die Teilchenhöhe h eine Klassenbreite von 0,05 $\mu$m gewählt.

**Beispiel 1**

Chips aus Polyethylenterephthalat (hergestellt über das Umesterungsverfahren mit Mn als Umesterungskatalysator, Mn-Konzentration: **100 ppm**) wurden bei 160 °C auf eine Restfeuchte von unterhalb 50 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm), die entsprechend Tabelle 2 pigmentiert sind, ebenfalls bei 160 °C auf eine Restfeuchte von unterhalb 50 ppm getrocknet und den jeweiligen Extrudern für die Deckschichten A und C zugeführt.

Es wurde durch Coextrusion und anschließende stufenweise Orientierung in Längs-und Querrichtung eine transparente dreischichtige Folie mit ABC-Aufbau und einer Gesamtdicke von 12 $\mu$m hergestellt. Die Dicke der jeweiligen Schichten ist der Tabelle 2 zu entnehmen.

Deckschicht A, Mischung aus:

| | |
|---|---|
| 94,0 Gew.-% | Polyethylenterephthalat RT 49 der Firma Hoechst AG mit einem SV-Wert von 800 |
| 6,00 Gew.-% | Masterbatch aus 99,0 Gew.% Polyethylenterephthalat (SV-Wert von 800) und 0,5 Gew.% Sylobloc 44 H (Fa. Grace) und 0,5 Gew.% Aerosil TT 600 (Fa. Degussa) |

Basisschicht B:

| | |
|---|---|
| 100,0 Gew.-% | Polyethylenterephthalat RT 49 der Firma Hoechst AG mit einem SV-Wert von 800 |

Deckschicht C, Mischung aus:

| | |
|---|---|
| 84,0 Gew.-% | Polyethylenterephthalat RT 49 der Firma Hoechst AG mit einem SV-Wert von 800 |
| 16,0 Gew.-% | Masterbatch aus 99,0 Gew.-% Polyethylenterephthalat und 0,5 Gew.-% Sylobloc 44 H (Fa. Grace) und 0,5 Gew.-% Aerosil TT 600 (Fa. Degussa) |

Die Herstellungsbedingungen in den einzelnen Verfahrensschritten waren:

| | | | | |
|---|---|---|---|---|
| Extrusion: | Temperaturen | A-Schicht: | 300 °C | |
| | | B-Schicht: | 300 °C | |
| | | C-Schicht: | 300 °C | |
| | Temperatur der Abzugswalze: | | 30°C | |
| | Düsenspaltweite: | | 1 mm | |
| | Temperatur der Abzugswalze: | | 30 °C | |
| Längsstreckung: | Temperatur: | | 80-125°C | |
| | Längsstreckverhältnis: | | 4,0 | |
| Querstreckung: | Temperatur: | | 80-135°C | |
| | Querstreckverhältnis: | | 4,0 | |
| Fixierung: | Temperatur: | | 230 °C | |
| | Dauer: | | 3 s | |

Nach Herstellung der Folie (nach diesem Beispiel und allen folgenden Beispielen) wurde diese auf der A-Seite in einem industriellen Metallisierer mit Aluminium unter Vakuum bedampft. Die Beschichtungsgeschwindigkeit betrug 6 m/s und die optische Dichte 2,6.

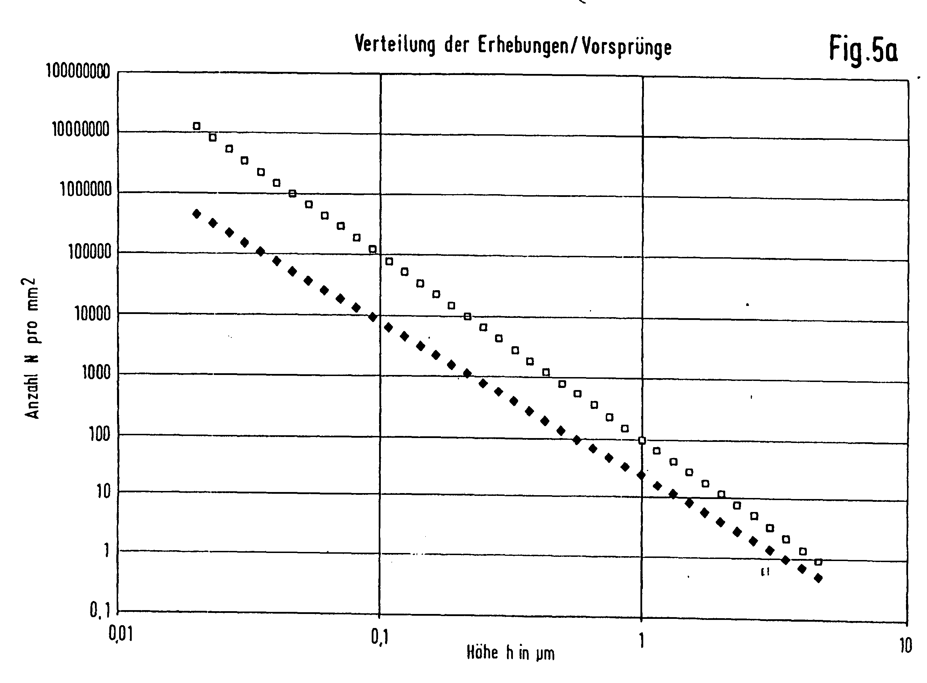

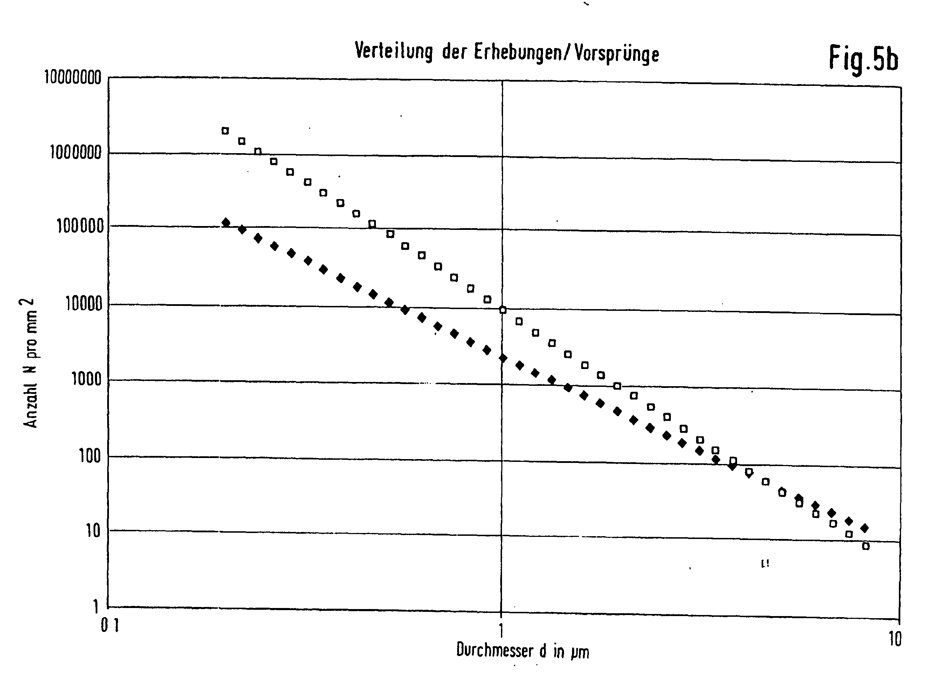

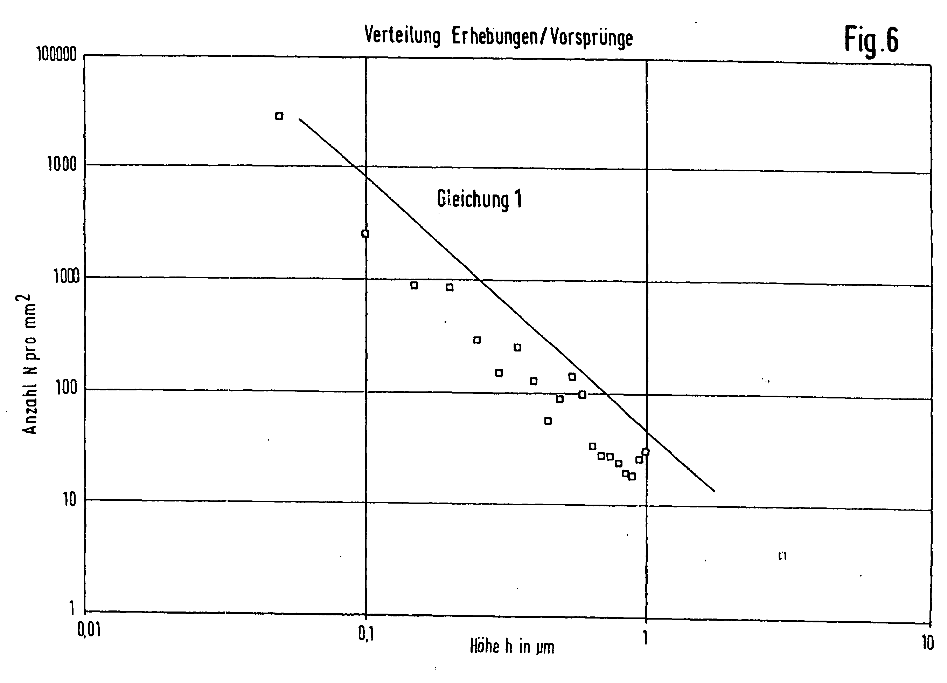

Die Folie hatte die geforderte Sauerstoffbarriere. Der Folienaufbau und die erzielten Eigenschaften derart hergestellter Folien sind in den Tabellen 1 und 2 dargestellt. Figur 6 zeigt für die Deckschicht A die mittels der auf Seite 24 beschriebenen Methode gemessenen Verteilungen für die Erhebungen/Vorsprünge N.

**Beispiel 2**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12$\mu$m hergestellt. Im Vergleich zu Beispiel 1 wurde nur die Deckschicht A geändert.

Deckschicht A, Mischung aus:

| | |
|---|---|
| 98,0 Gew.-% | Polyethylenterephthalat RT 49 der Firma Hoechst AG mit einem SV-Wert von 800 |

(fortgesetzt)

| 2,00 Gew.-% | Masterbatch aus 99,0 Gew.-% Polyethylenterephthalat (SV-Wert von 800) und 0,5 Gew.% Sylobloc 44 H (Fa. Grace) und 0,5 Gew.-% Aerosil TT 600 (Fa. Degussa) |

Die Verfahrensbedingungen waren für alle Schichten wie in Beispiel 1 gewählt.

**Beispiel 3**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von $12\mu$m hergestellt. Im Vergleich zu Beispiel 1 wurde nur die Deckschicht A geändert.
Deckschicht A, Mischung aus:

| 99,0 Gew.-% | Polyethylenterephthalat RT 49 der Firma Hoechst AG mit einem SV-Wert von 800 |
| 1,00 Gew.-% | Masterbatch aus 99,0 Gew.-% Polyethylenterephthalat (SV-Wert von 800) und 0,5 Gew.-% Sylobloc 44 H (Fa. Grace) und 0,5 Gew.-% Aerosil TT 600 (Fa. Degussa) |

Die Verfahrensbedingungen waren für alle Schichten wie in Beispiel 1 gewählt.

**Beispiel 4**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von $12\mu$m hergestellt. Im Vergleich zu Beispiel 1 wurde nur die Deckschicht A geändert.
Deckschicht A, Mischung aus:

| 98,0 Gew.-% | Polyethylenterephthalat RT 49 der Firma Hoechst AG mit einem SV-Wert von 800 |
| 2,00 Gew.-% | Masterbatch aus 99,75 Gew.-% Polyethylenterephthalat (SV-Wert von 800) und 0,25 Gew.-% Aerosil TT 600 (Fa. Degussa) |

Die Verfahrensbedingungen waren für alle Schichten wie in Beispiel 1 gewählt.

**Beispiel 5**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von $12\mu$m hergestellt. Im Vergleich zu Beispiel 1 wurde nur die Deckschicht A geändert.
Deckschicht A, Mischung aus:

| 98,0 Gew.-% | Polyethylenterephthalat RT 49 der Firma Hoechst AG mit einem SV-Wert von 800 |
| 2,00 Gew.-% | Masterbatch aus 99,75 Gew.-% Polyethylenterephthalat (SV-Wert von 800) und 0,25 Gew.-% Sylobloc 44 H (Fa. Grace) |

Die Verfahrensbedingungen waren für alle Schichten wie in Beispiel 1 gewählt.

**Beispiel 6**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von $12\mu$m hergestellt. Im Vergleich zu Beispiel 1 wurde nur die Deckschicht A geändert.
Deckschicht A, Mischung aus:

| 100,0 Gew.-% | Polyethylenterephthalat VR 49 der Firma Hoechst AG mit einem SV-Wert von 800 |

Der Polyesterrohstoff für die Deckschicht A wurde über das Umesterungsverfahren mit Ca als Umesterungskatalysator hergestellt, wobei die Ca-Konzentration 200 ppm betrug.

**Beispiel 7**

In ähnlicher Weise wie in Beispiel 1 wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 1 wurden die Deckschichten A und C geändert.
Deckschicht A, Mischung aus:

98,0 Gew.-%    Polyethylenterephthalat mit einem SV-Wert von 800
2,00 Gew.-%    Masterbatch aus 99,0 Gew.% Polyethylenterephthalat (SV-Wert von 800) und 1,0 Gew.-% Sylobloc 44 H (Fa. Grace)

Deckschicht C, Mischung aus:

90,0 Gew.-%    Polyethylenterephthalat mit einem SV-Wert von 800
10,0 Gew.%     Masterbatch aus 99,0 Gew.-% Polyethylenterephthalat (SV-Wert von 800) und 1,0 Gew.-% Sylobloc 44 H (Fa. Grace)

**Beispiel 8**

In ähnlicher Weise wie in Beispiel 7 wurde durch Coextrusion und anschließende stufenweise Orientierung in Längs- und Querrichtung eine transparente dreischichtige Folie mit ABC-Aufbau und einer Gesamtdicke von 12 $\mu$m hergestellt. Im Vergleich zu Beispiel 1 wurde die Deckschicht A geändert.
Deckschicht A, Mischung aus:

91,0 Gew.%     Polyethylenterephthalat mit einem SV-Wert von 800
1,00 Gew.-%    Masterbatch aus 99,0 Gew.-% Polyethylenterephthalat (SV-Wert von 800) und 1,0 Gew.-% Sylobloc 44 H (Fa. Grace)

Die Verfahrensbedingungen waren für alle Schichten wie in Beispiel 1 gewählt. Obwohl der Deckschicht A und der Basisschicht B additiv keine inerten Pigmente zugegeben wurden, enthält die Oberfläche der Deckschicht A Erhebungen /Vorsprünge. Diese rühren u.a. von den Prezipitaten des Umesterungskatalysators und Schwankungen im Herstellungsprozeß des Rohstoffes und der Folie her.

**Vergleichsbeispiel 1**

Es wurde das Beispiel 1 aus der EP-A-0 124 291 nachgearbeitet.

**Vergleichsbeispiel 2**

Es wurde das Beispiel 1 aus der EP-A-0 490 665 nachgearbeitet.

**Vergleichsbeispiel 3**

Es wurde das Beispiel 1 aus der DE-A-16 94 404 nachgearbeitet.

**Vergleichsbeispiel 4**

Es wurde das Beispiel 15 aus der EP-A-0 061 769 nachgearbeitet.

**Vergleichsbeispiel 5**

Es wurde das Beispiel 1 aus der EP-B-0 088 635 nachgearbeitet.

**Tabelle 1**

| Beispiel | Follendicke | Folienaufbau | Schichtdicke | | | Pigmente den Schichten | | | mittlere Pigmentdurchmesser, | | | Pigmentkonzentration | | |
|---|---|---|---|---|---|---|---|---|---|---|---|---|---|---|
| | μm | | A | B | C | A | B | C | A | B | C | A | B | C |
| | | | | μm | | | | | | μm | | | ppm | |
| Beispiel 1 | 12 | ABC | 1,0 | 9,5 | 1,5 | Sylobloc 44 H Aerosil TT 600 | keine | Sylovlox 44 H Aerosil TT 600 | 2,5 0,005 | | 2,5 0,005 | 300 300 | 0 0 | 800 800 |
| Beispiel 2 | 12 | ABC | 1,0 | 9,5 | 1,5 | Sylobloc 44 H Aerosil TT 600 | keine | Sylobloc 44 H Aerosil TT 600 | 2,5 0,005 | | 2,5 0,005 | 100 100 | 0 0 | 800 800 |
| Beispiel 3 | 12 | ABC | 1,0 | 9,5 | 1,5 | Sylobloc 44 H Aerosil TT 600 | keine | Sylobloc 44 H Aerosll TT 600 | 2,5 0,005 | | 2,5 0,005 | 50 50 | 0 0 | 800 800 |
| Beispiel 4 | 12 | ABC | 1,0 | 9,5 | 1,5 | Aerosil TT 600 | keine | Sylobloc 44 H Aerosil TT 600 | 2,5 0,005 | | 2,5 0,005 | 0 50 | 0 0 | 800 800 |
| Beispiel 5 | 12 | ABC | 1,0 | 9,5 | 1,5 | Sylobloc 44 H | keine | Sylobloc 44 H Aerosil TT 600 | 2,5 | | 2,5 0,005 | 50 0 | 0 0 | 800 800 |
| Beispiel 6 | 12 | ABC | 1,0 | 9,5 | 1,5 | | keine | Sylobloc 44 H Aerosil TT 600 | | | 2,5 0,005 | 0 0 | 0 0 | 800 800 |
| Beispiel 7 | 12 | ABC | 1,0 | 9,5 | 1,5 | Sylobloc 44 H | keine | Sylobloc 44 H | 2,5 | | 2,5 | 200 | 0 | 1000 |

EP 0 882 577 B1

| Beispiel | Follendicke | Folienaufbau | Schichtdicke | | | Pigmente den Schichten | | | mittlere Pigmentdurchmesser, | | | Pigmentkonzentration | | |
|---|---|---|---|---|---|---|---|---|---|---|---|---|---|---|
| | μm | | A | B | C | A | B | C | A | B | C | A | B | C |
| | | | μm | | | | | | μm | | | ppm | | |
| Beispiel 8 | 12 | ABC | 1,0 | 9,5 | 1,5 | Sylobloc 44 H | keine | Sylobloc 44 H | 2,5 | | 2,5 | 100 | 0 | 1000 |
| VB 1 | 10 | A | - | - | - | Anatas - $TiO_2$ | | | 0,4 | | | 1500 | | |
| VB 2 | 14 | A | - | - | - | 0 - $Al_2O_3$ | | | 0,2 | | | 3000 | | |
| VB 3 | 25 | ABA | 2,5 | 20 | 2,5 | Kaolin | - | Kaolin | 4 | | 4 | 1250 | | 1250 |
| VB 4 | 15 | AB | 7,5 | 7,5 | - | Zink Acetat Antimon Trioxid | Kaolin + Lubricant als Beschichtung | | | | | 230 400 | 5000 + solution | |
| VB 5 | 12 | AB | 6 | 6 | - | - | Internal Particles | | | 1,5 | | | 2000 | |

EP 0 882 577 B1

Tabelle 2

| Beispiel | Konstaten für die Höhenvertellung der Partikel | | Konstanten für die Dickenvertellung der Partikel | | Sauerstoffbamere | Reibung μk | | Rauhikeit $R_a$ | | Glanz | | Trübung | Verarbeltungsv erhalten |
|---|---|---|---|---|---|---|---|---|---|---|---|---|---|
| | A-Seite | C-Seite | A-Seite | C-Seite | | A/A | C/C | A-Seite C-Seite A-Seite | | | C-Seite | | |
| | | | | | $cm^3/m^2$ bar d | | | nm | | | | % | |
| Beispiel 1 | 1,3/2,45 | 1,5/2,6 | 3,3/2,4 | 3,5/3,1 | 0,45 | 0,45 | 0,4 | 25 | 60 | 185 | 180 | 1.7 | sehr gut |
| Beispiel 2 | 1,25/2,4 | 1,5/2,6 | 3,2/2,3 | 3,5/3,1 | 0,43 | 0,5 | 0,4 | 20 | 60 | 190 | 180 | 1,3 | sehr gut |
| Beispiel 3 | 1,2/2,2 | 1,5/2,6 | 3,18/2,3 | 3.5/3.1 | 0,43 | 0,55 | 0,4 | 18 | 60 | 190 | 180 | 1,3 | sehr gut |
| Beispiel 4 | 1,18/2,2 | 1,5/2,6 | 3,1/2,3 | 3,5/3,1 | 0,42 | 0.65 | 0,4 | 12 | 60 | 195 | 180 | 1,2 | gut |
| Beispiel 5 | 1,16/2,2 | 1,5/2,6 | 3,1/2,3 | 3,5/3,1 | 0,41 | 0,65 | 0,4 | 15 | 60 | 195 | 180 | 1,1 | gut |
| Beispiel 6 | 1,12/2,15 | 1,5/2,6 | 3,0/2,3 | 3,5/3.1 | 0,40 | 0,65 | 0,4 | 11 | 60 | 200 | 180 | 1,1 | gut |
| Beispiel 7 | 1,25/2,4 | 1,65/2,7 | 3,3/2,3 | 2,8/3,1 | 0,42 | 0,55 | 0,3 | 25 | 70 | 190 | 160 | 1,3 | gut |
| Beispiel 8 | 1,2/2,3 | 1,65/2,7 | 3,1/2,3 | 2,8/3,1 | 0,42 | 0,6 | 0,3 | 18 | 70 | 195 | 160. | 1,1 | gut |
| VB 1 | 1,1/2,9 | 1,1/2,8 | 4/3,5 | 4/3,5 | 2,4 | 0,15 | | 10 | | 130 | | 7 | gut |
| VB2 | 1,0/3,0 | 1.0/3.0 | 4/3.2 | 3,9/3,1 | 3,1 | 0,2 | | 20 | | 120 | | 9 | gut |
| VB 3 | 1,6/2,5 | 1,6/2,5 | 3,4/3,5 | 3,4/3,5 | 1,7 | 0,4 | | 75 | | 175 | | 1,5 | gut |
| VB 4 | - | - | | | 1,8 | blockt | 0,4 | 3,6 | 15 | 175 | 130 | 9 | schlecht |
| VB 5 | | - | | | 0,45 | blockt | 0,3 | 3 | 14 | 180 | 150 | 5 | sehr schlecht |
| Gemessen an der nicht metallisierten Folie<br>A-Seite: metallisierte Deckschicht<br>C-Seite: unmetallisierte Deckschicht | | | | | | | | | | | | | |

EP 0 882 577 B1

18

**Patentansprüche**

1. Biaxial orientierte, koextrudierte Polyesterfolie mit einer Basisschicht, die zumindest zu 80 Gew.-% aus einem thermoplastischen Polyester besteht und einer oder mehreren Deckschichten, von denen mindestens eine äußere Deckschicht inerte Partikel zwischen 0 und 0,08 Gew.-% und/oder interne Partikel entsprechend einem Mn-Gehalt im Bereich von 50 bis 200 ppm oder einem Ca-Gehalt im Bereich von 50 bis 300 ppm enthält und mit einer Metall oder Keramikschicht versehen ist, wobei die äußere Deckschicht eine Anzahl von Erhebungen/Vorsprüngen $N/mm^2$ Folienoberfläche aufweist, deren Höhen h größer als 0,01 $\mu$m und kleiner als 10 $\mu$m sind und deren Durchmesser d größer als 0,01 $\mu$m und kleiner als 10 $\mu$m sind, und wobei zwischen N und h die Gleichung (1)

$$\log N/mm^2 \leq A_h - B_h * \log (h/\mu m) \qquad (1)$$

mit $A_h$ = 1,4 und $B_h$ = 2,5 und zwischen N und d die Gleichung (2)

$$\log N/mm^2 \leq A_d - B_d * \log (d/\mu m) \qquad (2)$$

mit $A_d$ = 3,4 und $B_d$ = 2,4 bestehen.

2. Polyesterfolie nach Anspruch 1, **dadurch gekennzeichnet, daß** die äußere Deckschicht weniger als 0,02 Gew.-% eines inerten Fillers enthält.

3. Polyesterfolie nach Anspruch 1 oder 2, **dadurch gekennzeichnet, daß** die metallisierte Folie eine Sauerstoffdurchlässigkeit aufweist, die kleiner ist als 0,5 $cm^3/m^2$ bar d.

4. Polyesterfolie nach einem oder mehreren der Ansprüche 1 bis 3, **dadurch gekennzeichnet, daß** die metallisierte Folie eine Sauerstoffdurchlässigkeit aufweist, die kleiner ist als 0,45 $cm^3/m^2$ bar d.

5. Polyesterfolie nach einem oder mehreren der Ansprüche 1 bis 4, **dadurch gekennzeichnet, daß** die äußere Deckschicht eine höhere Glasübergangstemperatur aufweist als die Basisschicht.

6. Polyesterfolie nach einem oder mehreren der Ansprüche 1 bis 5, **dadurch gekennzeichnet, daß** die äußere Deckschicht eine Dicke von 0,1 bis 5 $\mu$m aufweist.

7. Polyesterfolie nach einem oder mehreren der Ansprüche 1 bis 6, **dadurch gekennzeichnet, daß** die Folie zweischichtig aufgebaut ist und aus der metallisierten äußeren Deckschicht und der nicht metallisierten Basisschicht besteht.

8. Polyesterfolie nach einem oder mehreren der Ansprüche 1 bis 7, **dadurch gekennzeichnet, daß** die Folie dreischichtig aufgebaut ist und aus der metallisierten äußeren Deckschicht, der Basisschicht und einer nicht metallisierten Deckschicht besteht, welche auf der der metallisierten Deckschicht gegenüberliegenden Seite der Basisschicht aufgebracht ist.

9. Polyesterfolie nach Anspruch 8, **dadurch gekennzeichnet, daß** die nicht metallisierte Deckschicht pigmentiert ist.

10. Polyesterfolie nach einem oder mehreren der Ansprüche 1 bis 8, **dadurch gekennzeichnet, daß** die metallisierte äußere Deckschicht pigmentiert ist.

11. Polyesterfolie nach einem oder mehreren der Ansprüche 1 bis 10, **dadurch gekennzeichnet, daß** mindestens die äußere Deckschicht in line beschichtet ist.

12. Verfahren zur Herstellung einer biaxial orientierten, mehrschichtigen Polyesterfolie gemäß Anspruch 1, bei dem Polyesterschmelzen entsprechend den Zusammensetzungen der Deck- und Basisschichten einer Mehrschichtdüse zugeführt werden, aus dieser auf eine Abkühlwalze extrudiert werden und die so erhaltene Vorfolie anschließend biaxial verstreckt und hitzefixiert wird, wobei mindestens eine äußere Deckschicht eine Anzahl von Erhebungen/Vorsprüngen N/mm² Folienoberfläche aufweist, deren Höhen h größer als 0,01 μm und kleiner als 10 μm sind, und deren Durchmessern größer als 0,01 μm und kleiner als 10 μm sind und wobei zwischen N und h die Weichung (1)

$$\log N/mm^2 \leq A_h - B_h * \log(h/\mu m) \qquad [0,01\ \mu m < h < 10\ \mu m] \qquad (1)$$

mit $A_h$ = 1,4 und $B_h$ = 2,5 und Zwischen N und d die Weichung (2)

$$\log N/mm^2 \leq A_d - B_d * \log(d/\mu m) \qquad [0,01\ \mu m < d < 10\ \mu m] \qquad (2)$$

mit $A_d$ = 3,4 und $B_d$ = 2,4 bestehen
und wobei die Folie anschließend metallisiert wird.

13. Verfahren zur Herstellung einer biaxial orientierten, mehrschichtigen Polyesterfolie nach Anspruch 12, bei dem Regenerat in einer Konzentration von 10 bis 50 Gew.-%, bezogen auf das Gesamtgewicht der Folie, der Extrusionsdüse zugeführt wird.

14. Verwendung der Folie nach einem oder mehreren Ansprüchen 1 bis 11 zum Verpacken von Lebens- und Genußmittel.

**Claims**

1. Biaxially oriented, coextruded polyester film having a base layer composed of at least 80% by weight of a thermoplastic polyester and having one or more outer layers, of which at least one outward-facing outer layer comprises inert particles at from 0 to 0.08% by weight and/or internal particles corresponding to an Mn content in the range from 50 to 200 ppm or to a Ca content in the range from 50 to 300 ppm and has been provided with a metal or a ceramic layer, where the outward-facing outer layer has a number N/mm² of film surface area of elevation/protrusions whose heights h are greater than 0.01 μm and smaller than 10 μm, and whose diameter d is greater than 0.01 μm and smaller than 10 μm, and where the equation (1) relates to N and h

$$\log N/mm^2 \leq A_h - B_h * \log (h/\mu m) \qquad (1)$$

where $A_h$ = 1.4 and $B_h$ = 2.5, and the equation (2) relates to N and d

$$\log N/mm^2 \leq A_d - B_d * \log (d/\mu m) \qquad (2)$$

where $A_d$ = 3.4 and $B_d$ = 2.4.

2. Polyester film according to Claim 1, **characterized in that** the outward-facing outer layer contains less than 0.02% by weight of an inert filler.

3. Polyester film according to Claim 1 or 2, **characterized in that** the metallized film has an oxygen transmission which is less than 0.5 cm³/m² bar d.

4. Polyester film according to one or more of Claims 1 to 3, **characterized in that** the metallized film has an oxygen transmission which is less than 0.45 cm³/m² bar d.

5. Polyester film according to one or more of Claims 1 to 4, **characterized in that** the outward-facing outer layer has a higher glass transition temperature than the base layer.

**6.** Polyester film according to one or more of Claims 1 to 5, **characterized in that** the outward-facing outer layer has a thickness of from 0.1 to 5.0 $\mu$m.

**7.** Polyester film according to one or more of Claims 1 to 6, **characterized in that** the film is built up from two layers and is composed of the metallized outward-facing outer layer and the unmetallized base layer.

**8.** Polyester film according to one or more of Claims 1 to 7, **characterized in that** the film is built up from three layers and is composed of the metallized outward-facing outer layer, the base layer and an unmetallized outer layer, which is applied to the side of the base layer opposite to that of the metallized outer layer.

**9.** Polyester film according to Claim 8,
**characterized in that** the unmetallized outer layer is pigmented.

**10.** Polyester film according to one or more of Claims 1 to 8, **characterized in that** the metallized outward-facing outer layer is pigmented.

**11.** Polyester film according to one or more of Claims 1 to 10, **characterized in that** at least the outward-facing outer layer is in-line coated.

**12.** Process for producing a biaxially oriented, multilayer polyester film according to Claim 1, in which polyester melts corresponding to the formulations of the outer and base layers are fed to a coextrusion die, extruded from this onto a cooling roll and the resultant prefilm is then biaxially oriented and heat-set, where at least one outward-facing outer layer has a number $N/mm^2$ of film surface area of elevation/protrusions whose heights h are greater than 0.01 $\mu$m and smaller than 10 $\mu$m, and whose diameter d is greater than 0.01 $\mu$m and smaller than 10 $\mu$m, and where the equation (1) relates to N and h

$$\log N/mm^2 \leq A_h - B_h * \log (h/\mu m) \qquad (1)$$

where $A_h = 1.4$ and $B_h = 2.5$, and the equation (2) relates to N and d

$$\log N/mm^2 \leq A_d - B_d * \log (d/\mu m) \qquad (2)$$

where $A_d = 3.4$ and $B_d = 2.4$,
and where the film is then metallized.

**13.** Process for producing a biaxially oriented, multilayer polyester film, according to Claim 12,
in which rework is introduced to the extrusion die in a concentration of from 10 to 50% by weight, based on the total weight of the film.

**14.** Use of the film according to one or more of Claims 1 to 11 for packaging of foodstuffs and luxury foods.

**Revendications**

**1.** Film de polyester coextrudé, orienté biaxialement, comportant une couche de base qui consiste à raison d'au moins 80 % en poids en un polyester thermoplastique et une ou plusieurs couches de recouvrement, dont au moins une couche de recouvrement externe contient des particules inertes à raison d'entre 0 et 0,08 % en poids et/ou des particules internes correspondant à une teneur en Mn dans la plage de 50 à 200 ppm ou à une teneur en Ca dans la plage de 50 à 300 ppm, et étant muni d'une couche de métal ou de céramique, la couche de recouvrement externe présentant un nombre de saillies/protubérances $N/mm^2$ de surface du film, dont les hauteurs h sont supérieures à 0,01 $\mu$m et inférieures à 10 $\mu$m et dont le diamètre d est supérieur à 0,01 $\mu$m et inférieur à 10 $\mu$m, et entre N et h existe la relation (1)

$$\log N/mm^2 \leq A_h - B_h \times \log (h/\mu m) \qquad (1)$$

où $A_h$ = 1,4 et $B_h$ = 2,5 et il existe entre N et d la relation (2) suivante :

$$\log N/mm^2 \leq A_d - B_d \times \log (d/\mu m) \qquad (2)$$

où $A_d$ = 3,4 et $B_d$ = 2,4.

2. Film de polyester selon la revendication 1, **caractérisé en ce que** la couche de recouvrement externe contient moins de 0,02 % en poids d'une charge inerte.

3. Film de polyester selon la revendication 1 ou 2, **caractérisé en ce que** le film métallisé présente une perméabilité à l'oxygène qui est inférieure à 0,5 $cm^3/m^2$ bar d.

4. Film de polyester selon une ou plusieurs des revendications 1 à 3, **caractérisé en ce que** le film métallisé présente une perméabilité à l'oxygène qui est inférieure à 0,45 $cm^3/m^2$ bar d.

5. Film de polyester selon une ou plusieurs des revendications 1 à 4, **caractérisé en ce que** la couche de recouvrement externe présente une plus haute température de transition vitreuse que la couche de base.

6. Film de polyester selon une ou plusieurs des revendications 1 à 5, **caractérisé en ce que** la couche de recouvrement externe a une épaisseur de 0,1 à 5 $\mu$m.

7. Film de polyester selon une ou plusieurs des revendications 1 à 6, **caractérisé en ce que** le film a une structure multicouche et est constitué de la couche de recouvrement externe métallisée et de la couche de base non métallisée.

8. Film de polyester selon une ou plusieurs des revendications 1 à 7, **caractérisé en ce que** le film a une structure tricouche et est constitué de la couche de recouvrement externe métallisée, de la couche de base et d'une couche de recouvrement non métallisée, qui est appliquée sur la face de la couche de base opposée à la couche de recouvrement métallisée.

9. Film de polyester selon la revendication 8, **caractérisé en ce que** la couche de recouvrement non métallisée est pigmentée.

10. Film de polyester selon une ou plusieurs des revendications 1 à 8, **caractérisé en ce que** la couche de recouvrement externe métallisée est pigmentée.

11. Film de polyester selon une ou plusieurs des revendications 1 à 10, **caractérisé en ce qu'**au moins la couche de recouvrement externe est revêtue en ligne.

12. procédé pour la fabrication d'un film de polyester multicouche, orienté biaxialement, selon la revendication 1, dans lequel des masses fondues de polyester correspondant aux compositions des couches de base et de recouvrement sont envoyées à une filière multicouche, de celle-ci sont extrudées sur un cylindre refroidisseur et le préfilm ainsi obtenu est ensuite étiré biaxialement et thermofixé, au moins une couche de recouvrement externe présentant un nombre de saillies/protubérances $N/mm^2$ de surface du film, dont les hauteurs h sont supérieures à 0,01 $\mu$m et inférieures à 10 $\mu$m et dont le diamètre d est supérieur à 0,01 $\mu$m et inférieur à 10 $\mu$m, et il existe entre N et h la relation (1) suivante :

$$\log N/mm^2 \leq A_h - B_h \times \log (h/\mu m) \qquad (1)$$

où $A_h$ = 1,4 et $B_h$ = 2,5 et il existe entre N et d la relation (2) suivante :

$$\log \text{N/mm}^2 \leq A_d - B_d \times \log (d/\mu m) \qquad (2)$$

où $A_d$ = 3,4 et $B_d$ = 2,4,
et le film étant ensuite métallisé.

**13.** Procédé pour la fabrication d'un film de polyester multicouche orienté biaxialement selon la revendication 12, dans lequel du produit de régénération est envoyé à la filière d'extrusion à une concentration de 10 à 50 % en poids, par rapport au poids total du film.

**14.** Utilisation du film selon une ou plusieurs des revendications 1 à 11, pour le conditionnement de produits alimentaires et autres produits de consommation.

Sauerstoffbarriere OTR: $0.4 \, cm^3/m^2$ d bar

Rauhigkeitswert $R_a$:        55 nm

**Fig.1a:** Gute Sauerstoffbarriere

Sauerstoffbarriere OTR: $3.2 \, cm^3/m^2$ b bar

Rauhigkeitswert $R_a$:        8 nm

**Fig.1b:** Schlechte Sauerstoffbarriere

Fig.2a

Fig.2b

Verteilung der Erhebungen/ Vorsprünge

EP 0 882 577 B1

Gleichung 2

Anzahl N pro mm²

Durchmesser d in µm

# Fig.3

EP 0 882 577 B1

Gleichung 1

EP 0 124 291

Anzahl N pro mm²

Höhe h in µm

Fig.4

Verteilung der Erhebungen/Vorsprünge

# Fig.5a

EP 0 882 577 B1

Verteilung der Erhebungen/Vorsprünge

Fig.5b

Anzahl N pro mm 2

Durchmesser d in µm

EP 0 882 577 B1

Verteilung Erhebungen/Vorsprünge

Fig.6

Gleichung 1

Anzahl N pro mm²

Höhe h in µm

EP 0 882 577 B1